# EUROPEAN PATENT SPECIFICATION

(11) **EP 1 816 494 B1**
(45) Date of publication and mention of the grant of the patent: **20.08.2008**
(21) Application number: 06252595.1
(22) Date of filing: 18.05.2006
(51) Int. Cl.: G02B 5/22, G02B 5/20, B41J 2/01

(54) **Method of fabricating color filter for displays**
Methode zur Herstellung von Farbfiltern für Bildschirme
Procédé de fabrication de filtres de couleur pour écrans

(30) Priority: 04.02.2006 KR 20060010921
(43) Date of publication of application: 08.08.2007
(73) Proprietor: Samsung Electronics Co., Ltd., Suwon-si, Gyeonggi-Do (KR)
(72) Inventor: Kim, Sung-woong, Suwon-si Gyeonggi-do (KR); Kim, Seong-jin, Seongnam-si Gyeonggi-do (KR); Shin, Seung-joo, Nowon-gu Seoul (KR); Kwon, Kye-si, Seongbuk-gu Seoul (KR); Kim, Sang-il, Yeongtong-gu Suwon-si Gyeonggi-do (KR)
(74) Representative: Greene, Simon Kenneth

(56) References cited:
- EP-A- 1 122 560
- US-A1- 2004 131 955
- US-B1- 6 630 274

## Description

The present invention relates to a method of fabricating a color filter, and more particularly, a method of fabricating a color filter by which color characteristics can be improved.

Up to now, cathode ray tube (CRT) monitors have been usually used to display information from TVs and computers. However, recently, flat panel displays, such as, liquid crystal displays (LCDs), plasma display panels (PDPs), electro-luminescence (EL) displays, light emitting diodes (LEDs), or field emission displays (FEDs), are being used with an increase in the sizes of screens. LCDs among these flat panel displays are widely used as desk-top computer monitors, lap-top computer monitors, etc. because of low power consumption.

General LCDs include a color filter that forms images of desired colors by transmitting white light modulated by a liquid crystal layer. A color filter includes an arrangement of a plurality of red (R), green (G), and blue (B) pixels formed on a transparent substrate. A color filter has been fabricated using a dyeing method, a pigment dispersion method, a printing method, an electrodeposition method, etc. However, these methods include a repetition of predetermined processes for pixels of each color, thus degrading the process efficiency and increasing the fabrication costs.

Accordingly, a method of fabricating a color filter using an inkjet printing technique is recently proposed, which is performed more simply and cost-effectively. In this method, ink drops of predetermined colors, such as, R, G, and B, are discharged into pixels on a substrate through the nozzles of an inkjet head, thereby forming a color filter.

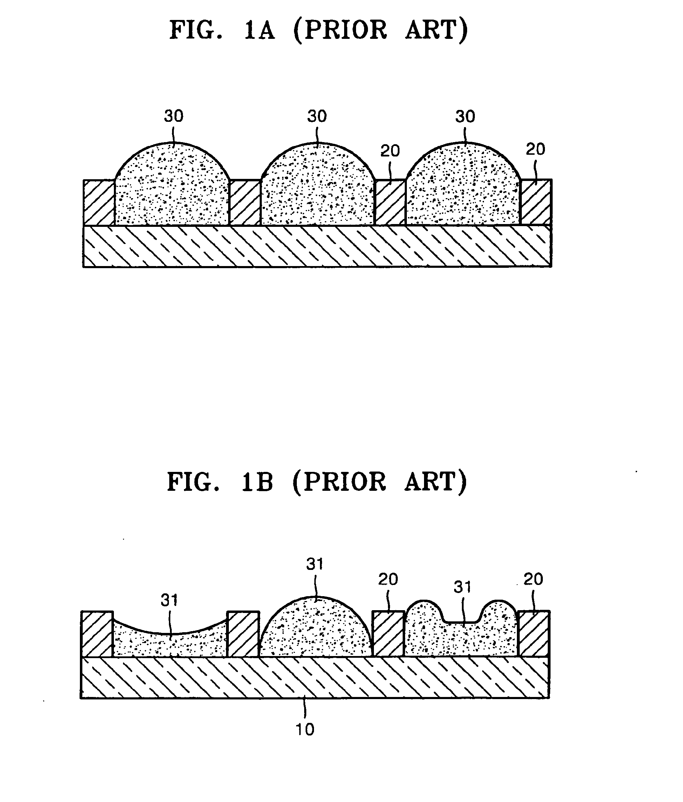

FIGS. 1A and 1B illustrate a conventional method of fabricating a color filter using an inkjet printing technique. First, referring to FIG. 1A, when ink droplets of predetermined colors are discharged from the nozzles of an inkjet head (not shown) into pixels defined by a black matrix 20 on a substrate 10, the pixels are filled with liquid ink layers 30. Then, referring to FIG. 1B, when the liquid ink layers 30 are dried, solid ink layers 31 of the predetermined colors are formed within the pixels. However, while the liquid ink layers 30 are being dried, a variety of mass flows occur within the pixels according to the properties of the black matrix 20, the characteristics of ink, the drying speed, etc. Accordingly, the thickness of each of the solid ink layers 31 within the pixels is very non-uniform as shown in FIG. 1B. Additionally, the pixels of the color filter are under different conditions according to their locations, so that the solid ink layers 31 have different shapes from one another. Due to the non-uniform thickness of each of the solid ink layers 31 within the pixels, light may leak from the pixels, or a blurry image may be generated. Consequently, the color characteristics of the color filter are degraded.

Prior art solutions are disclosed in US 2004 131955, US 6630274 and EP 1122560.

According to an aspect of the present invention, there is provided a method of manufacturing a color filter, including: forming a black matrix on a substrate, the black matrix defining a plurality of pixel; forming liquid ink layers within the pixels and drying the liquid ink layers; penetrating solvent vapor into the surfaces of the dried liquid ink layers so that the dried ink layers have mobile surfaces; and drying the ink layers having the mobile surfaces.

The solvent vapor may be penetrated into the surfaces of the dried liquid ink layers by putting the dried ink layers within a chamber filled with the solvent vapor.

The solvent of the solvent vapor may be formed of a material that is solvent for the dried ink layers. The solvent may be formed of a material having an affinity for the black matrix. The surface tension of the solvent may be in the range of 0.01 N/m to 0.08N/m.

The solvent may be at least one selected from the group consisting of di(propylene glycol) methyl ether acetate (DPMA), propylene glycol monomethyl ether acetate (PGMEA), ethyle acetate, and acetone.

The forming of the black matrix may include forming a light shade layer on an upper surface of the substrate to have a predetermined thickness, and patterning the light shade layer to define a plurality of pixels on the substrate. The liquid ink layers may be formed within the pixels using an inkjet printing technique.

The present invention thus provides a method of fabricating a color filter by which the color characteristics of the color filter can be improved by making the thickness of each ink layer formed within each pixel uniform.

The above and other features and advantages of the present invention will become more apparent by describing in detail exemplary embodiments thereof with reference to the attached drawings in which:
FIGS. 1A and 1B illustrate a conventional method of fabricating a color filter;
FIGS. 2A through 2F are cross-sectional views illustrating a method of fabricating a color filter, according to an embodiment of the present invention;
FIG. 3 is a picture of the color filter fabricated using the conventional method of FIGS. 1A and 1B; and
FIG. 4 is a picture of the color filter fabricated using the method according to the embodiment of the present invention shown in FIGS. 2A through 2F.

The present invention will now be described more fully with reference to the accompanying drawings, in which exemplary embodiments of the invention are shown. In the drawings, the thicknesses of elements are exaggerated for clarity. Like reference numerals in the drawings denote like elements, and thus their description will be omitted.

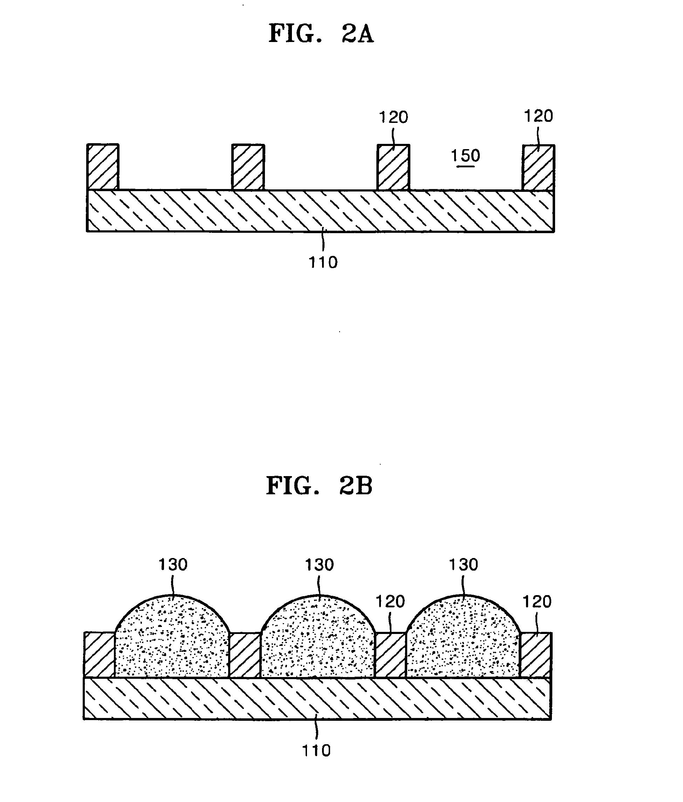

FIGS. 2A through 2D are cross-sectional views illustrating a method of manufacturing a color filter, according to an embodiment of the present invention. Referring to FIG. 2A, first, a back matrix 120 is formed on a substrate 110. The substrate 110 is transparent and may be a glass substrate or a plastic substrate. The black matrix 120 may be formed by forming a light shade layer on the substrate 110 and patterning the light shade layer using a photolithographic process. More specifically, solution of light shade material is coated on the substrate 110 using a method, such as, spin coating, die coating, or dip coating, and then soft baked to thereby form the light shade layer. Thereafter, the light shade layer is exposed to light, developed, and patterned. Then, the patterned light shade layer is hard baked to thereby form the black matrix 120. The black matrix 120 may be about 1.5 µm in height and about 30 µm in width. The thus-formed back matrix 120 defines a plurality of pixels 150 on the substrate 110.

Thereafter, referring to FIG. 2B, liquid ink layers 130 are formed within the pixels 150. The liquid ink layers 130 may be formed using an inkjet printing method. In this case, the liquid ink layers 130 may be formed by discharging ink droplets of predetermined colors from the nozzles of an inkjet head (not shown) into the pixels 150.

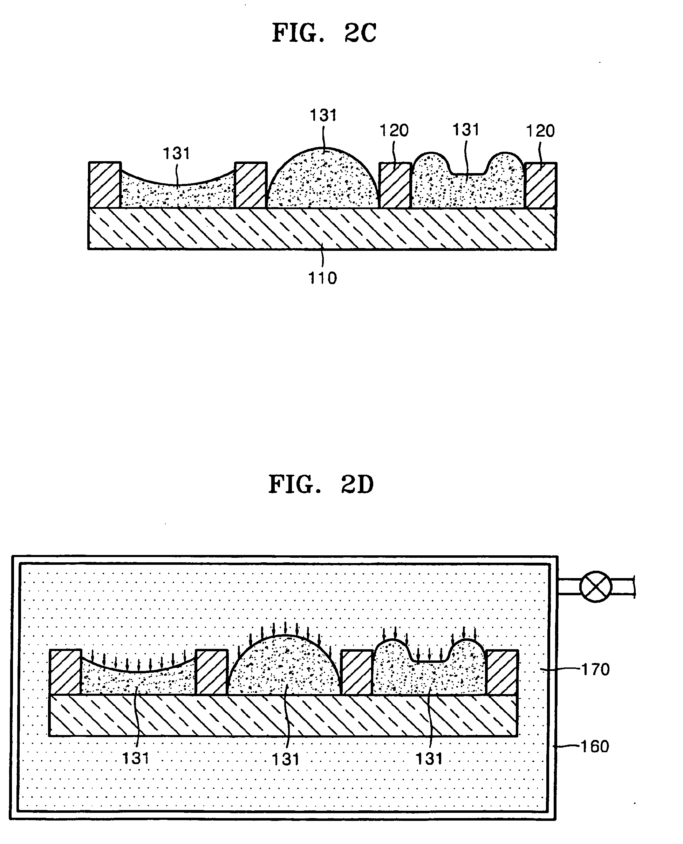

Then, referring to FIG. 2C, the liquid ink layers 130 filled within the pixels 150 are dried. However, during this process, mass flow occurs within the pixels 150 with a variation in the drying speed, etc. As a result, solid ink layers 131 having non-uniform thicknesses as shown in FIG. 2C are formed within the pixels 150. Additionally, the liquid ink layers 130 are dried under different conditions depending on the locations of the pixels 150, so that the solid ink layers 131 have different shapes from one another.

Next, referring to FIG. 2D, the substrate 110 on which the solid ink layers 131 having non-uniform thicknesses are put within a chamber 160 filled with solvent vapor 170. Preferably, the solvent of the solvent vapor 170 has solubility for the solid ink layers 131. For example, the solvent may be at least one of di(propylene glycol) methyl ether acetate (DPMA), propylene glycol monomethyl ether acetate (PGMEA), ethyle acetate, and acetone. The solvent may be formed of materials other than the above-described materials.

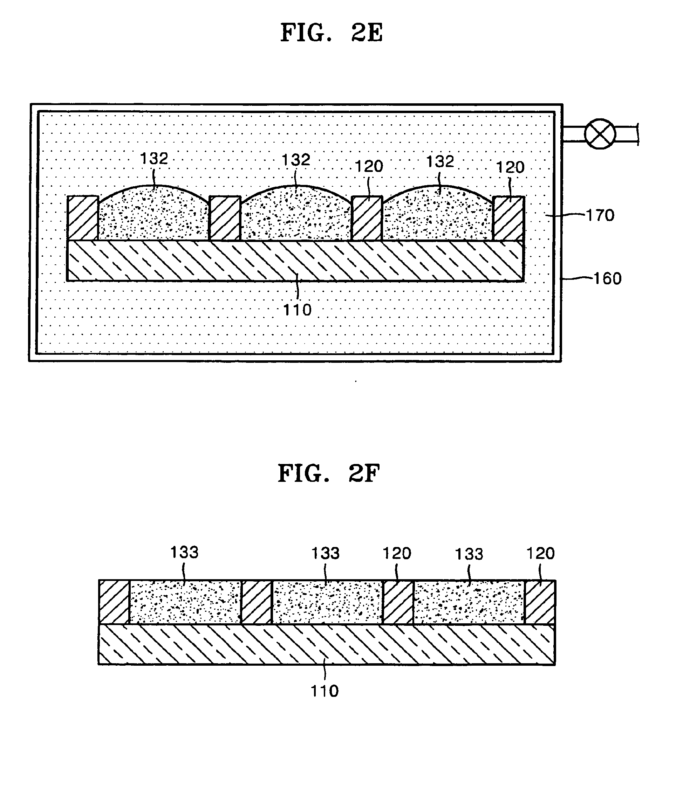

When the substrate 110 on which the solid ink layers 131 are formed is put within a chamber 160 filled with the solvent vapor 170, the solvent vapor 170 penetrate through the surfaces of the solid ink layers 131 and resolve the surfaces of the solid ink layers 131. Hence, the surfaces of the solid ink layers 131 get mobility (i.e. become a fluid). Then, the mobile surfaces of the solid ink layers 132 are re-arranged into stable shapes by the surface energy and gravity, whereby ink layers 132 having mobile surfaces are formed in identical shapes within the pixels 150 as shown in FIG. 2E. The shapes of the ink layers 132 vary according to the surface tension of the solvent. In the present embodiment, a solvent having a surface tension of about 0.01-0.08 N/m may be used. The solvent is preferably formed of a material having an affinity for the black matrix 120, that is, a material having a small contact angle with respect to the black matrix 120. The pressure, processing time, etc. of the solvent vapor 170 filled within the chamber 160 may be optimized to form the ink layers 132 having identical shapes.

Finally, the ink layers 132 having mobile surfaces and identical shapes are dried. The amount of solvent absorbed by the ink layers 132 is extremely small and the drying is completed for a very short period of time, so that little changes in the thicknesses of the ink layers 132 due to mass flow occur during this process. Therefore, ink layers 133 having uniform thicknesses are formed within the pixels 151 as shown in FIG. 2F.

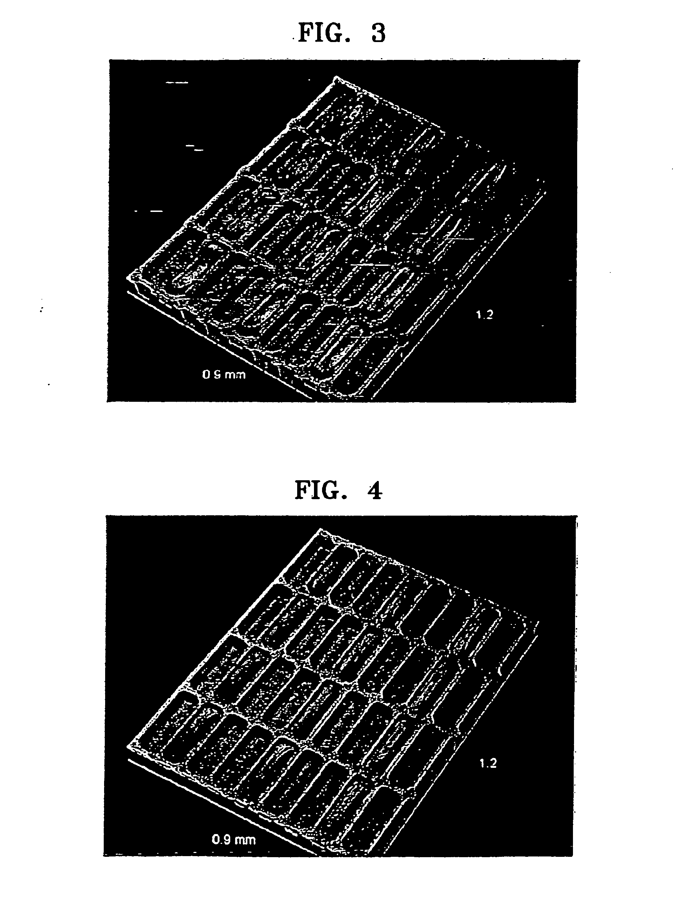

FIG. 3 is a picture of the color filter fabricated using the conventional method of FIGS. 1A and 1B. FIG. 4 is a picture of the color filter fabricated using the method according to the embodiment of the present invention shown in FIGS. 2A through 2F. Referring to FIGS. 3 and 4, the color filter fabricated using the conventional method includes ink layers having non-uniform thicknesses formed within pixels, while the color filter fabricated using the method according to the embodiment of the present invention includes ink layers having relatively uniform thicknesses formed within pixels.

As described above, in a method of fabricating a color filter according to the present invention, solvent vapor penetrates through the surfaces of dried ink layers and resolves the surfaces, and the resolved ink layers are dried again, whereby ink layers having uniform thicknesses can be formed within the pixels of the color filter. Thus, light leakage or image blurring, which are conventional problems, can be reduced, resulting in an improvement of the color characteristics of the color filter.

Although a color filter fabricating method which is usually used in LCDs has been illustrated, this method can be equally applied to the formation of an organic light emitting layer using an inkjet printing technique in the manufacture of an organic light emitting diode (OLED) or the formation of an organic semiconductor using an inkjet printing technique in the manufacture of an organic thin film transistor (OTFT).

While the present invention has been particularly shown and described with reference to exemplary embodiments thereof, it will be understood by those of ordinary skill in the art that various changes in form and details may be made therein. The present invention is defined by the following claims.

## Claims

1. A method of manufacturing a color filter, comprising:
forming a black matrix on a substrate, the black matrix defining a plurality of pixels;
forming liquid ink layers within the pixels and drying the liquid ink layers;
penetrating solvent vapor into the surfaces of the dried liquid ink layers so that the dried ink layers become fluid and have mobile surfaces; and
drying the ink layers having the mobile surfaces.

2. The method of claim 1, wherein the solvent vapor is penetrated into the surfaces of the dried liquid ink layers by putting the dried ink layers within a chamber filled with the solvent vapor.

3. The method of claim 2, wherein the solvent of the solvent vapor is formed of a material that is solvent for the dried ink layers.

4. The method of claim 2 or 3, wherein the solvent is formed of a material having an affinity for the black matrix.

5. The method of any of claims 2 to 4, wherein the surface tension of the solvent is in the range of 0.01 N/m to 0.08N/m.

6. The method of any of claims 2 to 5, wherein the solvent is at least one selected from the group consisting of di(propylene glycol) methyl ether acetate, propylene glycol monomethyl ether acetate, ethyle acetate, and acetone.

7. The method of any preceding claim, wherein the substrate is transparent.

8. The method of any preceding claim, wherein the forming of the black matrix comprises:
forming a light shade layer on an upper surface of the substrate to have a predetermined thickness; and
patterning the light shade layer to define a plurality of pixels on the substrate.

9. The method of any preceding claim, wherein the liquid ink layers are formed within the pixels using an inkjet printing technique.

## Patentansprüche

1. Verfahren zur Herstellung eines Farbfilters, umfassend:
Ausbilden einer Schwarzmatrix auf einem Substrat, wobei die Schwarzmatrix eine Mehrzahl von Pixeln definiert,
Ausbilden von Flüssigfarbschichten in den Pixeln und Trocknen der Flüssigfarbschichten,
Eindringen von Lösungsmitteldampf in die Oberflächen der getrockneten Flüssigfarbschichten, so dass die getrockneten Farbschichten fluid werden und mobile Oberflächen aufweisen, und
Trocknen der Farbschichten mit den mobilen Oberflächen.

2. Verfahren nach Anspruch 1, wobei der Lösungsmitteldampf in die Oberflächen der getrockneten Flüssigfarbschichten **dadurch** eindringt, dass die getrockneten Farbschichten in eine mit dem Lösungsmitteldampf gefüllte Kammer eingebracht werden.

3. Verfahren nach Anspruch 2, wobei das Lösungsmittel des Lösungsmitteldampfs aus einer Substanz gebildet ist, die ein Lösungsmittel für die getrockneten Farbschichten ist.

4. Verfahren nach Anspruch 2 oder 3, wobei das Lösungsmittel aus einer Substanz gebildet ist, die eine Affinität für die Schwarzmatrix aufweist.

5. Verfahren nach einem der Ansprüche 2 bis 4, wobei die Oberflächenspannung des Lösungsmittels im Bereich von 0,01 N/m bis 0,08 N/m liegt.

6. Verfahren nach einem der Ansprüche 2 bis 5, wobei das Lösungsmittel mindestens eines ausgewählt aus der Gruppe bestehend aus Dipropylenglycolmethyletheracetat, Propylenglycolmonomethyletheracetat, Ethylacetat und Aceton ist.

7. Verfahren nach einem der vorhergehenden Ansprüche, wobei das Substrat transparent ist.

8. Verfahren nach einem der vorhergehenden Ansprüche, wobei das Ausbilden der Schwarzmatrix umfasst:
Ausbilden einer Lichtabblendschicht auf einer Oberseite des Substrats so, dass sie eine vorgegebene Dicke aufweist, und
Mustern der Lichtabblendschicht so, dass eine Mehrzahl von Pixeln auf dem Substrat definiert werden.

9. Verfahren nach einem der vorhergehenden Ansprüche, wobei die Flüssigfarbschichten in den Pixeln unter Verwendung einer Tintenstrahldrucktechnik ausgebildet werden.

## Revendications

1. Procédé de fabrication d'un filtre de couleur, comprenant :
la formation d'une matrice noire sur un substrat, la matrice noire définissant une pluralité de pixels ;
la formation de couches d'encre liquide dans les pixels et le séchage des couches d'encre liquide ;
la pénétration d'une vapeur de solvant dans les surfaces des couches d'encre liquide séchées, de sorte que les couches d'encre séchées deviennent fluides et aient des surfaces mobiles ; et
le séchage des couches d'encre ayant les surfaces mobiles.

2. Procédé selon la revendication 1, dans lequel la vapeur de solvant pénètre dans les surfaces des couches d'encre liquide séchées en plaçant les couches d'encre séchées dans une chambre remplie de la vapeur de solvant.

3. Procédé selon la revendication 2, dans lequel le solvant de la vapeur de solvant est formé d'un matériau qui est dissolvant pour les couches d'encre séchées.

4. Procédé selon la revendication 2 ou 3, dans lequel le solvant est formé d'un matériau ayant une affinité pour la matrice noire.

5. Procédé selon l'une quelconque des revendications 2 à 4, dans lequel la tension de surface du solvant est comprise dans la plage de 0,01 N/m à 0,08 N/m.

6. Procédé selon l'une quelconque des revendications 2 à 5, dans lequel le solvant est au moins un élément sélectionné dans le groupe se composant d'acétate d'éther méthylique de di(propylèneglycol), d'acétate d'éther mono méthylique de propylèneglycol, d'acétate d'éthyle et d'acétone.

7. Procédé selon l'une quelconque des revendications précédentes, dans lequel le substrat est transparent.

8. Procédé selon l'une quelconque des revendications précédentes, dans lequel la formation de la matrice noire comprend :
la formation d'une couche d'ombre légère sur une surface supérieure du substrat pour avoir une épaisseur prédéterminée ; et
la reproduction de dessins sur la couche d'ombre légère pour définir une pluralité de pixels sur le substrat.

9. Procédé selon l'une quelconque des revendications précédentes, dans lequel les couches d'encre liquide sont formées dans les pixels en utilisant une technique d'impression par jet d'encre.
